# EUROPEAN PATENT SPECIFICATION

(11) **EP 3 404 974 B1**
(45) Date of publication and mention of the grant of the patent: **27.05.2020**
(21) Application number: 16892096.5
(22) Date of filing: 04.03.2016
(51) Int. Cl.: H04W 72/04

(54) **METHOD AND APPARATUS FOR SWITCHING SUBFRAME CONFIGURATIONS**
VERFAHREN UND VORRICHTUNG ZUM UMSCHALTEN VON SUBFRAME-KONFIGURATIONEN
PROCÉDÉ ET APPAREIL POUR COMMUTER DES CONFIGURATIONS DE SOUS-TRAME

(43) Date of publication of application: 21.11.2018
(73) Proprietor: Huawei Technologies Co., Ltd., Longgang District Shenzhen, Guangdong 518129 (CN)
(72) Inventor: ZOU, Zhimin, Shenzhen, Guangdong 518129 (CN); WANG, Qiang, Shenzhen, Guangdong 518129 (CN); SHI, Lingling, Shenzhen, Guangdong 518129 (CN)
(74) Representative: Pfenning, Meinig & Partner mbB
(86) International application number: PCT/CN2016/075644
(87) International publication number: WO 2017/147905

(56) References cited:
- WO-A1-2014/131355
- WO-A1-2014/186993
- CN-A- 104 010 368
- CN-A- 104 349 459
- CN-A- 104 780 608
- US-A1- 2002 169 008
- US-A1- 2014 036 719
- US-A1- 2014 334 353
- US-A1- 2015 172 030

## Description

### TECHNICAL FIELD

The present invention relates to the communications field, and in particular, to a subframe configuration switching method and apparatus.

### BACKGROUND

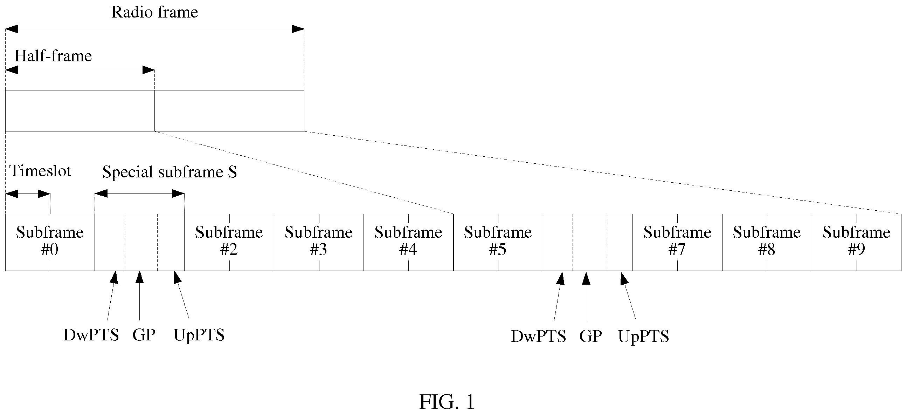

In a time division duplex (Time Division Duplex, TDD) communications system, uplink transmission and downlink transmission may be distinguished by using periods of time on a timeline. For example, in a Long Term Evolution (Long Term Evolution, LTE) communications system, a frame structure used for TDD is shown in FIG. 1, and a radio frame (radio frame) includes ten subframes (subframe) that are respectively numbered 0 to 9. A subframe used for uplink transmission is an uplink subframe and is identified by using "U"; a subframe used for downlink transmission is a downlink subframe and is identified by using "D"; and a special subframe further exists, is identified by using "S", and includes a downlink pilot timeslot (DwPTS), a guard period (GP), and an uplink pilot timeslot (UpPTS).

Currently, in an LTE-TDD system, there are seven subframe configurations specifically shown in Table 1 which are also referred to as uplink-downlink configurations, so as to adapt to different service requirements. For example, when a service such as web page browsing or video on demand is performed on a terminal, a downlink data volume is obviously greater than an uplink data volume, and a base station may configure, based on analysis of a traffic volume, more downlink subframes than uplink subframes, for example, one of the subframe configurations 2 to 5. For another example, when the base station provides a conventional voice service to the terminal, the base station may configure that downlink subframes are equal to uplink subframes, for example, the subframe configuration 1. A service of the terminal may be changed, and therefore the base station may flexibly adjust a subframe configuration based on a service requirement, so as to adapt to the service change.

**Table 1**

| Uplink-downlink configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

In the prior art, when a base station needs to reset a subframe configuration of a cell, the base station deactivates the cell. In this case, a terminal served by the cell detaches from a network. Then, the base station sets an operating mode of the cell to a mode matching the reset subframe configuration, and then activates the cell, and the terminal served by the cell attaches to the network again.

It can be learned that, in a conventional subframe configuration switching process, a terminal detaches from a network and then attaches to the network, and consequently a service of the terminal is interrupted, and user experience is relatively poor.
US 2014/0334353 A1 discusses a dynamic time division duplexing (TDD) method applicable to a user equipment and a control node. A base station (BS) transmits to a least one user equipment (UE) a system information block (SIB) having a first modification period, and the BS may transmit a TDD uplink-downlink subframe configuration during the first modification period. The BS also configures for at least one UE a second modification period which is in an integer divisor of the first modification period and could be within the first modification period so that the BS may transmit a second TDD uplink-downlink subframe configuration in the second modification period.
US 2014/0036719 A1 discusses a method and apparatus for changing Time Division Duplex (TDD) Uplink (UL)-Downlink (DL) configuration. The method includes receiving by the UE a signaling for TDD UL-DL reconfiguration and changes from an old TDD UL-DL configuration to a new TDD UL-DL configuration. The method further includes considering by the UE before a specific timing that a number of Physical Hybrid ARQ Indicator Channel (PHICH) groups is determined by the old UL-DL configuration at least for overlapped non-UL subframes between the new TDD UL-DL configuration and the old TDD UL-DL configuration.
US 2002/0169008 A1 discusses a wireless multi-carrier communication system having designated control sub-channels that enable a receiving device to operate in a low power decoding mode. Payload information may also be send via the control sub-channels. Payload information that can not fit within the control sub-channels are send one or more payload sub-channels. The receiving device operates in a second, generally higher power decoding mode when decoding the payload sub-channels.
WO 2014/131355 A1 discusses a method, system and equipment for the counting of a DRX timer in a dynamic TDD (Time Division Duplex) system. The method comprises: network side equipment determining information for the counting of the DRX timer of which user equipment needs to be notified according to the TDD configuration change; notifying the user equipment of the information for the counting of the DRX timer to enable the user equipment to perform counting on the DRX timer according to the information for the counting of the DRX timer.

### SUMMARY

Embodiments of the present invention provide a subframe configuration switching method and apparatus, to greatly reduce impact of subframe configuration switching on a service of a terminal, and therefore improve service experience of the terminal.

To achieve the foregoing objective, the following technical solutions are used in the embodiments of the present invention.

According to a first aspect, this application provides a subframe configuration switching method. In the method, a base station determines that a subframe configuration of a cell needs to be changed from a first configuration to a second configuration, and notifies a terminal in the cell of the change in the subframe configuration of the cell. Additionally, the base station sends the second configuration to the terminal in the cell when a first duration, that is after the notification, expires; and makes the second configuration effective when a second duration, that is after the base station sends the second configuration, expires, where the base station does not perform initial transmission scheduling on the terminal in the cell within the first duration, and the base station does not schedule the terminal in the cell within the second duration.

Corresponding to the first aspect, according to a second aspect, this application provides a subframe configuration switching apparatus, located in a base station. The apparatus includes a determining unit, a notification unit, and a setting unit. The determining unit is configured to determine that a subframe configuration of a cell of the base station needs to be changed from a first configuration to a second configuration. The notification unit is configured to: when the determining unit determines that the subframe configuration of the cell needs to be changed from the first configuration to the second configuration, notify a terminal in the cell of the change in the subframe configuration of the cell; and send the second configuration to the terminal in the cell when a first duration, that is after the notification, expires. The setting unit is configured to make the second configuration effective when a second duration, that is after the notification unit sends the second configuration, expires, where the base station does not perform initial transmission scheduling on the terminal in the cell within the first duration, and the base station does not schedule the terminal in the cell within the second duration.

Corresponding to the first aspect, according to a third aspect, this application provides a base station, including a processor, a transceiver, and a memory. The memory is configured to store a program, and the processor invokes the program stored in the memory, to perform the method according to the first aspect of this application.

It can be learned that, in the foregoing aspects, the base station sets a smoothing period before a moment at which a new subframe configuration takes effect, and the smoothing period includes the first duration and the second duration. The first duration is set before the base station sends the new subframe configuration to the terminal, and service scheduling on an initial transmission service is not performed within the first duration. The second duration is set after the base station sends the new subframe configuration to the terminal, and scheduling is not performed within the second duration. In this way, a smooth transition of retransmission service time sequence may be completed, and subframe configuration switching is completed when a service is near-hitless.

In the foregoing aspects, a sum of the first duration and the second duration is less than a preset value. A period of time maintained by the first duration and the second duration is harmful to a service of the terminal in the cell. Therefore, the period of time needs to be as short as possible (be controlled to be within 100 ms as much as possible), so as to achieve a near-hitless service objective.

In the foregoing aspects, in any one of the following cases, when the terminal in the cell needs to retransmit data such as a hybrid automatic repeat request (hybrid automatic repeat request, HARQ) within the first duration, the base station performs retransmission scheduling on the terminal within the first duration. For example, in the second aspect, the base station further includes a scheduling unit. The scheduling unit is configured to: when the terminal in the cell needs to retransmit data within the first duration, perform retransmission scheduling within the first duration. For another example, in the third aspect, the processor is further configured to: when the terminal in the cell needs to retransmit data within the first duration, perform retransmission scheduling on the terminal within the first duration.

In the foregoing aspects, in any one of the following cases, when the base station needs to send system information within the first duration, the base station sends the system information within the first duration; and/or when the base station needs to send system information within the second duration, the base station sends the system information within the second duration. For example, in the second aspect, the notification unit is further configured to: when the base station needs to send system information within the first duration, send the system information within the first duration; and/or when the base station needs to send system information within the second duration, send the system information within the second duration. For another example, in the third aspect, the transceiver is further configured to: when the base station needs to send system information within the first duration, send the system information within the first duration; and/or when the base station needs to send system information within the second duration, send the system information within the second duration.

In the foregoing aspects, when the base station determines that the subframe configuration of the cell needs to be changed from the first configuration to the second configuration, the base station may determine, based on a status of uplink and downlink services of the cell, that the subframe configuration of the cell needs to be changed from the first configuration to the second configuration. For example, in the second aspect, the determining unit is specifically configured to determine, based on a status of uplink and downlink services of the cell, that the subframe configuration of the cell needs to be changed from the first configuration to the second configuration. For another example, in the fourth aspect, the processor is specifically configured to determine, based on a status of uplink and downlink services of the cell, that the subframe configuration of the cell needs to be changed from the first configuration to the second configuration.

It can be learned that, in the foregoing aspects of this application, the base station sets the first duration and the second duration before the moment at which the new subframe configuration takes effect. The first duration is set before the base station sends the new subframe configuration to the terminal, and service scheduling other than information broadcast and HARQ retransmission is stopped within the first duration. The second duration is set after the base station sends the new subframe configuration to the terminal, and service scheduling other than information broadcast is stopped within the second duration. In this way, a smooth transition of HARQ time sequence may be completed, and subframe configuration switching is completed when a service is near-hitless. This avoids a problem in the prior art that a terminal detaches from a network and then attaches to the network in a subframe configuration switching process and consequently a service of the terminal is interrupted. Based on the subframe configuration switching method provided in the present invention, impact of subframe configuration switching on a service of a terminal can be greatly greatly reduced, and therefore service experience of the terminal is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a frame structure of TDD according to an embodiment of the present invention;
FIG. 2 is a schematic diagram of a communications system according to an embodiment of the present invention;
FIG. 3 is a schematic diagram of a subframe configuration switching method according to an embodiment of the present invention;
FIG. 4 is a structural block diagram of a base station according to an embodiment of the present invention;
FIG. 5 is a structural block diagram of a subframe configuration switching apparatus according to an embodiment of the present invention; and
FIG. 6 is another structural block diagram of a base station according to an embodiment of the present invention.

### DESCRIPTION OF EMBODIMENTS

The invention made is disclosed in the attached set of independent claims. Further embodiments are disclosed in the attached set of dependent claims.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Some terms in this application are explained and described below for the ease of understanding by a person skilled in the art.
1. Abase station is a device connecting a terminal to a wireless network, and includes, but is not limited to: an evolved node B (evolved Node B, eNB), a radio network controller (radio network controller, RNC), a node B (Node B, NB), a base station controller (Base Station Controller, BSC), a base transceiver station (Base Transceiver Station, BTS), a home base station (for example, a Home evolved NodeB, or a Home Node B, HNB), a baseband unit (BaseBand Unit, BBU), a WiFi access point (Access Point, AP), and the like.
2. A terminal, also referred to as user equipment (User Equipment, UE), is a device providing voice and/or data connectivity to a user, for example, a handheld device or an in-vehicle device having a wireless connection function.
3. A subframe configuration, also referred to as an uplink-downlink configuration (uplink-downlink configuration), is a configuration for a subframe structure of a radio frame in a TDD system, and stipulates a type of each subframe, for example, an uplink subframe or a downlink subframe. For example, Table 1 shows seven configurations in an LTE-TDD system.
4. "Aplurality of" means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

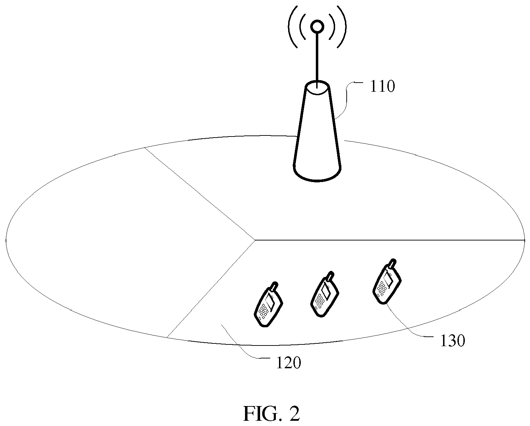

Referring to FIG. 2, FIG. 2 is a schematic diagram of a communications system according to an embodiment of this application. As shown in FIG. 2, the communications system is a TDD communications system, at least one cell is configured on a base station 110, each cell corresponds to one physically wireless coverage area 120, and a terminal 130 in the area 120 accesses a wireless network by using the base station 110. The cell operates in a TDD mode, and a subframe configuration of the cell is a first configuration. An uplink/downlink service proportion of the cell is changed, the current configuration (that is, the first configuration) is not appropriate for the current service proportion, and the base station 110 may configure a new subframe configuration such as a second configuration for the cell. In the prior art, the base station 110 implements subframe configuration switching by performing cell deactivation and resetting. Consequently, the terminal detaches from a network, and a service is interrupted.

In consideration of this problem, this application provides a subframe configuration switching method. Smoothing periods are set before a moment at which a new subframe configuration takes effect, and the smoothing periods include a first smoothing period and a second smoothing period. The first smoothing period is set before a base station sends the new subframe configuration to a terminal, and is used to stop service scheduling other than information broadcast and hybrid automatic repeat request (hybrid automatic repeat request, HARQ) retransmission. The second smoothing period is set after the base station sends the new subframe configuration to the terminal, and is used to stop service scheduling other than information broadcast. In this way, a smooth transition of HARQ time sequence may be completed, and subframe configuration switching is completed when a service is near-hitless.

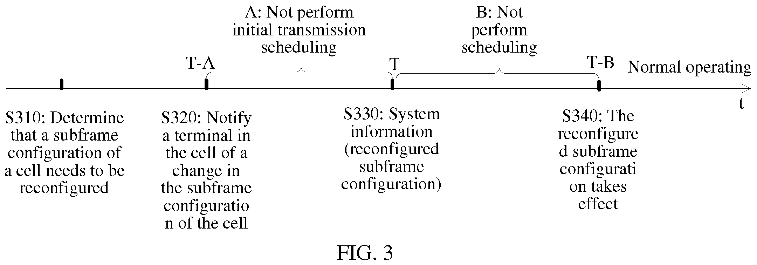

Referring to FIG. 3, FIG. 3 is a schematic diagram of a subframe configuration switching method according to this application. As shown in FIG. 3, there is a time point T on a timeline t, and a base station broadcasts a new subframe configuration to a terminal at the time point T. In the prior art, after a base station broadcasts a new subframe configuration, the new subframe configuration immediately takes effect (that is, the base station performs uplink-downlink scheduling by using the new subframe configuration). In this embodiment, the new subframe configuration does not immediately take effect, but takes effect only when a duration B expires (that is, at a T+B moment shown in FIG. 3), and in the duration B, the base station stops scheduling including initial transmission scheduling and retransmission scheduling. Additionally, in a duration A before the terminal is notified of the new subframe configuration, the base station is still using an original subframe configuration, and in the duration A, the base station does not perform initial transmission scheduling anymore, but performs only retransmission scheduling. The durations A and B are respectively a former smoothing period and a latter smoothing period, and in these two smoothing periods, the base station may normally broadcast system information. By setting these two smoothing periods, the base station may complete subframe configuration switching without deactivating and resetting a cell but only in need of performing transient scheduling suspension, and smooth transition of a HARQ time sequence is ensured. In this way, subframe configuration switching may be completed when a service is near-hitless.

It should be noted that, the foregoing scheduling is scheduling on the terminal in the cell whose subframe configuration is changed.

Additionally, the base station may determine, by monitoring a cell service, whether reconfiguration needs to be performed, and after it is determined that reconfiguration needs to be performed, the base station notifies the terminal in the cell of the change in the subframe configuration, so that the terminal learns that a subframe configuration of a serving cell of the terminal is about to change. As shown in FIG. 3, the subframe configuration switching method provided in this embodiment of this application includes the following steps.

S310: A base station determines that a subframe configuration of a cell needs to be reconfigured.

Specifically, the base station may determine, by monitoring uplink and downlink services of the cell, whether the current subframe configuration is appropriate for a current service structure of the cell, and further determine a reconfigured subframe configuration after it is determined that the current subframe configuration is not appropriate for the current service structure, that is, the base station determines that the subframe configuration of the cell needs to be changed from a first configuration (the current subframe configuration) to a second configuration (the reconfigured subframe configuration). For example, the current subframe configuration of the cell is the configuration 0 in Table 1, and the configuration 0 is applicable to a service structure in which uplink services are more than downlink services. When the base station monitors a change in the service structure of the cell, and the downlink services are more than the uplink services, the configuration 0 is not appropriate for the current service structure. Therefore, the base station needs to reconfigure the subframe configuration of the cell, for example, change the subframe configuration from the configuration 0 to the configuration 3.

S320: The base station notifies a terminal in the cell of a change in the subframe configuration of the cell.

The base station may broadcast system information to the terminal in the cell, an information element is carried in the system information, and the information element is used to indicate that the subframe configuration of the cell is about to change. In this way, after receiving the system information, the terminal learns that the subframe configuration of the cell is about to change according to the information element.

S330: The base station sends a reconfigured subframe configuration to the terminal in the cell when first duration A, that is after the notification, expires.

Referring to FIG. 3, the base station may begin to send, at a T moment, the reconfigured subframe configuration to the terminal by using the system information, that is, the base station broadcasts the system information to the terminal, and the system information carries the reconfigured subframe configuration.

Additionally, within the first duration A, because the reconfigured subframe configuration has not been sent to the terminal, the original subframe configuration (that is, the foregoing current subframe configuration a first subframe configuration) is still effective, but the base station stops initial transmission scheduling, and allows only system information sending and retransmission scheduling. It should be noted that, both the system information sending and the retransmission scheduling herein are performed by using the original subframe configuration, and the initial transmission scheduling herein is also performed by using the original subframe configuration.

To achieve an effect that subframe configuration switching is near-hitless to a UE service, some services such as HARQ retransmission between the terminal in the cell and the base station may be reserved within the first duration as much as possible. Because, within the first duration, the subframe configuration configured by the terminal in the cell is still the original subframe configuration, subframe configuration switching does not cause a service between the base station and the terminal to be in chaos, and then retransmission may still be performed or the system information may still be broadcast to the terminal.

S340: When second duration B, that is after the base station sends the reconfigured subframe configuration, expires, the base station makes the reconfigured subframe configuration take effect. The taking effect herein means that the base station may perform uplink-downlink scheduling by using the taken-effect subframe configuration, and therefore after the subframe configuration takes effect, the base station may normally operate, that is, perform uplink-downlink scheduling by using the reconfigured subframe configuration, to implement data transmission.

Generally, the base station broadcasts information to terminals in a cell. Because the terminals have different receiving capabilities, the terminals receive the information at different moments. A terminal receiving the information switches an operating mode of the terminal to perform an uplink service in a new subframe configuration, and a terminal receiving no system information still performs an uplink service in an original subframe configuration. If the base station still performs retransmission scheduling while broadcasting the new subframe configuration, the service between the base station and the terminal is caused to be in chaos.

For example, a packet of HARQ retransmission performed in the new subframe configuration may fall into a subframe indicated by the original subframe configuration. For example, if downlink data of the terminal operating in the new subframe configuration is decoded unsuccessfully, but the base station still does not perform subframe configuration switching, the terminal sends a HARQ retransmission request to the base station in an uplink subframe indicated by the new subframe configuration, and the base station receives, in an uplink subframe indicated by the original subframe configuration, a HARQ retransmission request sent by the terminal. If the uplink subframes indicated by the original subframe configuration and the new subframe configuration are different, the base station does not receive the HARQ retransmission request from the terminal, and therefore does not retransmit data to the terminal. It can be learned that, in a process in which the base station broadcasts the new subframe configuration, if HARQ retransmission is still performed, a HARQ time sequence is caused to be in chaos.

Therefore, within the second duration B, the base station stops all scheduling on the terminal in the cell. Additionally, because the base station sends the reconfigured subframe configuration (that is, the foregoing second subframe configuration) to the terminal, each stopped scheduling herein is scheduling performed by using the reconfigured subframe configuration.

It should be noted that, the foregoing scheduling is scheduling on a terminal in the cell whose subframe configuration is changed.

Moreover, the system information is usually broadcast periodically. When a period of broadcasting the system information arrives within the first duration A and the second duration B, the base station still broadcasts the system information. Moreover, in step S330, the base station may broadcast the reconfigured subframe configuration to the terminal in the cell a plurality of times by periodically broadcasting the system information.

In this application, the original subframe configuration is referred to as the first configuration, and the reconfigured subframe configuration is referred to as the second configuration.

Additionally, a sum of the first duration and the second duration is less than a preset value. For example, the sum of the first duration and the second duration is controlled to be within 100 ms as much as possible. In a specific implementation, the first duration and the second duration may be implemented by using timers, that is, the base station may maintain two timers that are respectively referred to as a former smoothing timer and a latter smoothing timer whose durations are respectively the first duration and the second duration.

In a preferred embodiment of the present invention, the base station may monitor uplink and downlink services in a third preset duration before the first duration, determine an uplink data volume of a cell in the third preset duration and a downlink data volume of the cell in the third preset duration, determine whether a current subframe configuration can satisfy the uplink data volume or the downlink data volume, and if the current subframe configuration cannot satisfy the uplink data volume or the downlink data volume, determine that the subframe configuration of the cell needs to be reconfigured.

Based on the subframe configuration switching method provided in the present invention, the base station sets the first duration and the second duration before the moment at which the new subframe configuration takes effect. The first duration is set before the base station sends the new subframe configuration to the terminal, and service scheduling other than information broadcast and HARQ retransmission is stopped within the first duration. The second duration is set after the base station sends the new subframe configuration to the terminal, and service scheduling other than information broadcast is stopped within the second duration. In this way, a smooth transition of HARQ time sequence may be completed, and subframe configuration switching is completed when a service is near-hitless. This avoids a problem in the prior art that a terminal detaches from a network and then attaches to the network in a subframe configuration switching process and consequently a service of the terminal is interrupted. Based on the subframe configuration switching method provided in the present invention, impact of subframe configuration switching on a service of a terminal can be greatly reduced, and therefore service experience of the terminal is improved.

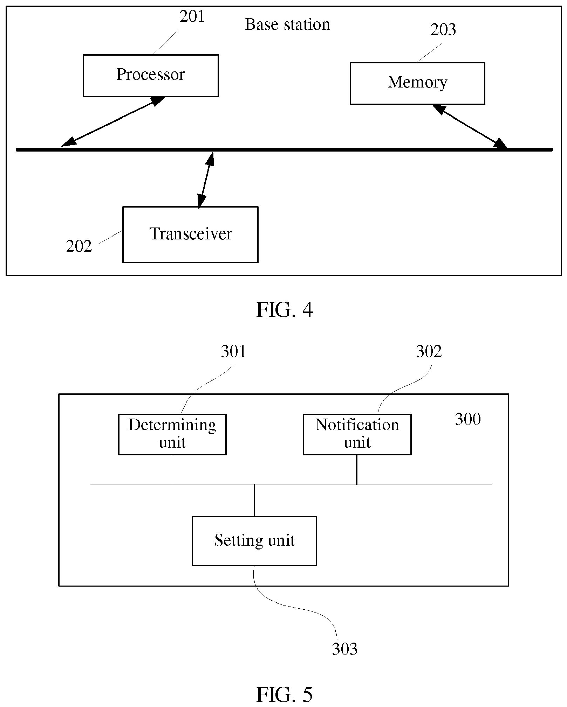

An embodiment of the present invention provides a base station. As shown in FIG. 4, the base station includes: a processor 201, a transceiver 202, and a memory 203.

The processor 201 may be one processor, or may be a collective name of a plurality of processing elements. For example, the processor may be a central processing unit (central processing unit, CPU), an application-specific integrated circuit (Application Specific Integrated Circuit, ASIC), or one or more integrated circuits configured to implement this embodiment of this application, for example, one or more microprocessors (digital signal processor, DSP) or one or more field programmable gate arrays (Field Programmable Gate Array, FPGA).

The transceiver 202 may be implemented by an optical transceiver, an electrical transceiver, a wireless transceiver, or any combination thereof. For example, the optical transceiver may be a small form-factor pluggable (English: small form-factor pluggable, SFP for short) transceiver (English: transceiver), an enhanced small form-factor pluggable (English: enhanced small form-factor pluggable, SFP+ for short) transceiver, or a 20 Gigabit small form-factor pluggable (English: 20 Gigabit small form-factor pluggable, XFP for short) transceiver. The electrical transceiver may be an Ethernet (English: Ethernet) network interface controller (English: network interface controller, NIC for short). The wireless transceiver may be a wireless network interface controller (English: wireless network interface controller, WNIC for short).

The memory 203 is configured to store program code, and the processor 201 invokes the program code to perform an operation described in the foregoing method embodiment. The memory 203 may include a volatile memory (English: volatile memory) such as a random access memory (English: random-access memory, RAM for short). The memory 203 may also include a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). The memory 203 may further include a combination of the foregoing types of memories.

For example, the processor 201 invokes the program code to perform the following operations:
determining that a subframe configuration of a cell needs to be changed from a first configuration to a second configuration, and notifying, by using the transceiver 202, a terminal in the cell of the change in the subframe configuration of the cell;
sending, by using the transceiver 202, the second configuration to the terminal in the cell when first duration, that is after the notification, expires; and
making the second configuration effective when second duration, that is after the base station sends the second configuration, expires, where the base station does not perform initial transmission scheduling on the terminal in the cell within the first duration, and the base station does not schedule the terminal in the cell within the second duration.

The processor 201 invokes the program code to further perform the following operation: when the terminal in the cell needs to retransmit data within the first duration, performing retransmission scheduling on the terminal within the first duration. In a specific implementation, the processor 201 determines control signaling and data that are needed by retransmission scheduling, the transceiver 202 sends the control signaling determined by the processor 201 to the terminal in the cell, and transmits the data, and the terminal in the cell receives, based on the received control signaling, retransmission data sent by the base station.

The processor 201 invokes the program code to further perform the following operation: when the base station needs to send system information within the first duration, sending the system information within the first duration; and/or when the base station needs to send system information within the second duration, sending the system information within the second duration.

The processor 201 may determine, based on a status of uplink and downlink services of the cell, that the subframe configuration of the cell needs to be changed from the first configuration to the second configuration.

In this embodiment, a sum of the first duration and the second duration is less than a preset value. For example, the preset value may be 100 ms.

An embodiment of the present invention further provides a subframe configuration switching apparatus that may be disposed at a base station. As shown in FIG. 5, the apparatus 300 includes: a determining unit 301, a notification unit 302, and a setting unit 303.

The determining unit 301 is configured to determine that a subframe configuration of a cell of the base station needs to be changed from a first configuration to a second configuration.

The notification unit 302 is configured to: when the determining unit 301 determines that the subframe configuration of the cell needs to be changed from the first configuration to the second configuration, notify a terminal in the cell of the change in the subframe configuration of the cell. Moreover, the notification unit 302 is further configured to send the second configuration to the terminal in the cell when first duration, that is after the notification, expires.

The setting unit 303 is configured to make the second configuration effective when second duration, that is after the notification unit 302 sends the second configuration, expires, where the base station does not perform initial transmission scheduling on the terminal in the cell within the first duration, and the base station does not schedule the terminal in the cell within the second duration.

The base station may schedule the terminal in the cell by using a scheduling unit.

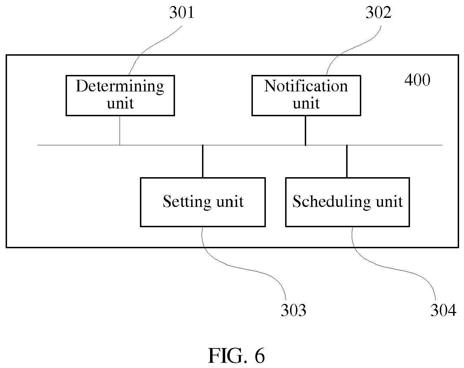

Referring to FIG. 6, FIG. 6 is a schematic structural diagram of a base station according to an embodiment of the present invention. As shown in FIG. 6, in addition to the foregoing subframe configuration switching apparatus 300, the base station 400 further includes a scheduling unit 304.

The scheduling unit 304 is configured to: when data needs to be retransmitted within first duration, perform retransmission scheduling within the first duration.

The foregoing notification unit 302 is further configured to: when the base station needs to send system information in either of the first duration and the second duration, send the system information in the corresponding duration.

The determining unit 301 is specifically configured to determine, based on a status of uplink and downlink services of the cell, that the subframe configuration of the cell needs to be changed from the first configuration to the second configuration.

It should be noted that, a sum of the first duration and the second duration is less than a preset value. For example, the preset value is 100 ms.

It should be noted that, the foregoing units may be processors that are independently disposed, or may be implemented by a processor integrated in the base station. Moreover, the foregoing units may be stored in a memory of the base station in a program code form, and a processor of the base station invokes the program code and executes functions of the foregoing units. Moreover, the units may be integrated together, or may be independently implemented. The processor described herein may be a CPU, an ASIC, or one or more integrated circuits configured to implement this embodiment of this application. Moreover, the foregoing notification unit 302 may send corresponding information to the terminal by using an air interface. The base station may further include an apparatus such as a radio frequency circuit or an antenna, so as to send information that the notification unit 302 needs to notify.

The base station provided in this embodiment of the present invention sets the first duration and the second duration before the moment at which the new subframe configuration takes effect. The first duration is set before the base station sends the new subframe configuration to the terminal, and service scheduling other than information broadcast and HARQ retransmission is stopped within the first duration. The second duration is set after the base station sends the new subframe configuration to the terminal, and service scheduling other than information broadcast is stopped within the second duration. In this way, a smooth transition of HARQ time sequence may be completed, and subframe configuration switching is completed when a service is near-hitless. This avoids a problem in the prior art that a terminal detaches from a network and then attaches to the network in a subframe configuration switching process and consequently a service of the terminal is interrupted. Based on the base station provided in the present invention, impact of subframe configuration switching on a service of a terminal can be greatly reduced, and therefore service experience of the terminal is improved.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented based on a requirement, that is, an inner structure of an apparatus is divided into different function modules to implement all or part of the functions described above. For a detailed working process of the foregoing apparatus, refer to a corresponding process in the foregoing method embodiments, and details are not described herein again.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A subframe configuration switching method, comprising:
determining (S310), by a base station, that a subframe configuration of a cell needs to be changed from a first configuration to a second configuration, and notifying (S320) a terminal in the cell of the change in the subframe configuration of the cell;
sending (S330), by the base station, the second configuration to the terminal in the cell when a first duration, that is after the notification, expires; and
making (S340), by the base station, the second configuration effective when a second duration, that is after the base station sends the second configuration, expires, wherein the base station does not perform initial transmission scheduling on the terminal in the cell within the first duration, and the base station does not schedule the terminal in the cell within the second duration.

2. The method according to claim 1, wherein when the terminal in the cell needs to retransmit data within the first duration, the base station performs retransmission scheduling on the terminal within the first duration.

3. The method according to claim 1 or 2, wherein when the base station needs to send system information within the first duration, the base station sends the system information within the first duration; and/or
when the base station needs to send system information within the second duration, the base station sends the system information within the second duration.

4. The method according to any one of claims 1 to 3, wherein the determining (S310), by a base station, that a subframe configuration of a cell needs to be changed from a first configuration to a second configuration comprises:
determining, based on a status of uplink and downlink services of the cell, that the subframe configuration of the cell needs to be changed from the first configuration to the second configuration.

5. The method according to any one of claims 1 to 4, wherein a sum of the first duration and the second duration is less than a preset value.

6. A subframe configuration switching apparatus (300), located in a base station, and comprising:
a determining unit (301), configured to determine that a subframe configuration of a cell of the base station needs to be changed from a first configuration to a second configuration;
a notification unit (302), configured to: when the determining unit determines that the subframe configuration of the cell needs to be changed from the first configuration to the second configuration, notify a terminal in the cell of the change in the subframe configuration of the cell, wherein
the notification unit (302) is further configured to send the second configuration to the terminal in the cell when a first duration, that is after the notification, expires; and
a setting unit (303), configured to make the second configuration effective when a second duration, that is after the notification unit sends the second configuration, expires, wherein
the base station does not perform initial transmission scheduling on the terminal in the cell within the first duration, and the base station does not schedule the terminal in the cell within the second duration.

7. The apparatus (300) according to claim 6, wherein when the terminal in the cell needs to retransmit data within the first duration, the base station performs retransmission scheduling on the terminal within the first duration.

8. The apparatus (300) according to claim 6 or 7, wherein the notification unit (302) is further configured to: when the base station needs to send system information within the first duration, send the system information within the first duration; and/or
when the base station needs to send system information within the second duration, send the system information within the second duration.

9. The apparatus (300) according to any one of claims 6 to 8, wherein the determining unit (301) is specifically configured to determine, based on a status of uplink and downlink services of the cell, that the subframe configuration of the cell needs to be changed from the first configuration to the second configuration.

10. The apparatus (300) according to any one of claims 6 to 9, wherein a sum of the first duration and the second duration is less than a preset value.

11. A computer program, comprising instructions for performing the method according to any one of claims 1 to 5.

12. A computer-readable storage medium, comprising the program of claim 11.

## Patentansprüche

1. Umschaltverfahren zur Hilfsrahmenkonfiguration, umfassend:
Bestimmen (S310) durch eine Basisstation, dass eine Hilfsrahmenkonfiguration einer Zelle von einer ersten Konfiguration zu einer zweiten Konfiguration geändert werden muss, und Benachrichtigen (S320) eines Endgeräts in der Zelle über die Änderung der Hilfsrahmenkonfiguration der Zelle;
Senden (S330) der zweiten Konfiguration durch die Basisstation an das Endgerät in der Zelle, wenn eine erste Zeitspanne, d. h. nach der Benachrichtigung, abläuft; und
Effektiv machen (S340), durch die Basisstation, der zweiten Konfiguration, wenn eine zweite Zeitspanne, d. h, nachdem die Basisstation die zweite Konfiguration gesendet hat, abläuft, wobei die Basisstation keine anfängliche Übertragungsplanung auf dem Endgerät in der Zelle innerhalb der ersten Zeitspanne durchführt und die Basisstation das Endgerät in der Zelle nicht innerhalb der zweiten Zeitspanne einplant.

2. Verfahren nach Anspruch 1, wobei, wenn das Endgerät in der Zelle Daten innerhalb der ersten Zeitspanne erneut übertragen muss, die Basisstation eine Neuübertragungsplanung auf dem Endgerät innerhalb der ersten Zeitspanne durchführt.

3. Verfahren nach Anspruch 1 oder 2, wobei, wenn die Basisstation Systeminformationen innerhalb der ersten Zeitspanne senden muss, die Basisstation die Systeminformationen innerhalb der ersten Zeitspanne sendet; und/oder wenn die Basisstation Systeminformationen innerhalb der zweiten Zeitspanne senden muss, die Basisstation die Systeminformationen innerhalb der zweiten Zeitspanne sendet.

4. Verfahren nach einem der Ansprüche 1 bis 3, wobei das Bestimmen (S310), durch eine Basisstation, dass eine Hilfsrahmenkonfiguration einer Zelle von einer ersten Konfiguration in eine zweite Konfiguration umgeändert werden muss, Folgendes umfasst:
Bestimmen, auf der Grundlage eines Status der Uplink- und Downlink-Dienste der Zelle, dass die Hilfsrahmenkonfiguration der Zelle von der ersten Konfiguration in die zweite Konfiguration umgeändert werden muss.

5. Verfahren nach einem der Ansprüche 1 bis 4, wobei eine Summe der ersten Zeitspanne und der zweiten Zeitspanne kleiner ist als ein voreingestellter Wert.

6. Umschaltvorrichtung zur Hilfsrahmenkonfiguration (300), die in einer Basisstation angeordnet ist und Folgendes umfasst:
eine Bestimmungseinheit (301), die ausgebildet ist, um zu bestimmen, dass eine Hilfsrahmenkonfiguration einer Zelle der Basisstation von einer ersten Konfiguration in eine zweite Konfiguration umgeändert werden muss;
eine Benachrichtigungseinheit (302), die zu Folgendem ausgebildet ist:
wenn die Bestimmungseinheit bestimmt, dass die Hilfsrahmenkonfiguration der Zelle von der ersten Konfiguration in die zweite Konfiguration umgeändert werden muss, Benachrichtigen eines Endgeräts in der Zelle über die Änderung der Hilfsrahmenkonfiguration der Zelle, wobei die Benachrichtigungseinheit (302) ferner ausgebildet ist, um die zweite Konfiguration an das Endgerät in der Zelle zu senden, wenn eine erste Zeitspanne, das heißt nach der Benachrichtigung, abläuft; und
eine Einstelleinheit (303), die ausgebildet ist, um die zweite Konfiguration effektiv zu machen, wenn eine zweite Zeitspanne, d. h. nachdem die Benachrichtigungseinheit die zweite Konfiguration gesendet hat, abläuft, wobei die Basisstation keine anfängliche Übertragungssplanung auf dem Endgerät in der Zelle innerhalb der ersten Zeitspanne durchführt, und die Basisstation das Endgerät in der Zelle nicht innerhalb der zweiten Zeitspanne einplant.

7. Vorrichtung (300) nach Anspruch 6, wobei, wenn das Endgerät in der Zelle Daten innerhalb der ersten Zeitspanne erneut übertragen muss, die Basisstation eine Neuübertragungsplanung auf dem Endgerät innerhalb der ersten Zeitspanne durchführt.

8. Vorrichtung (300) nach Anspruch 6 oder 7, wobei die Benachrichtigungseinheit (302), ferner zu Folgendem ausgebildet ist:
wenn die Basisstation Systeminformationen innerhalb der ersten Zeitspanne senden muss, Senden der Systeminformationen innerhalb der ersten Zeitspanne; und/oder
wenn die Basisstation Systeminformationen innerhalb der zweiten Zeitspanne senden muss, Senden der Systeminformationen innerhalb der zweiten Zeitspanne.

9. Vorrichtung (300) nach einem der Ansprüche 6 bis 8, wobei die Bestimmungseinheit (301) speziell ausgebildet ist, um, auf der Grundlage eines Status der Uplink- und Downlink-Dienste der Zelle zu bestimmen, dass die Hilfsrahmenkonfiguration der Zelle von der ersten Konfiguration in die zweite Konfiguration geändert werden muss.

10. Vorrichtung (300) nach einem der Ansprüche 6 bis 9, wobei eine Summe der ersten Zeitspanne und der zweiten Zeitspanne kleiner ist als ein voreingestellter Wert.

11. Computerprogramm, umfassend Befehle zum Durchführen des Verfahrens nach einem der Ansprüche 1 bis 5.

12. Computerlesbares Speichermedium, umfassend das Programm nach Anspruch 11.

## Revendications

1. Procédé de commutation de configuration de sous-trame, consistant à :
déterminer (S310), au moyen d'une station de base, qu'une configuration de sous-trame d'une cellule nécessite un changement d'une première configuration à une seconde configuration, et à notifier (S320) à un terminal de la cellule du changement de la configuration de sous-trame de la cellule ;
envoyer (S330), au moyen de la station de base, la seconde configuration au terminal de la cellule lorsqu'une première durée, c'est-à-dire après la notification, expire ; et
fabriquer (S340), au moyen de la station de base, la seconde configuration effective lorsqu'une seconde durée, c'est-à-dire après que la station de base envoie la seconde configuration, expire, la station de base n'effectuant pas de programmation de transmission initiale sur le terminal de la cellule dans la première durée et la station de base ne planifiant pas le terminal de la cellule dans la seconde durée.

2. Procédé selon la revendication 1, dans lequel lorsque le terminal de la cellule nécessite la retransmission de données dans la première durée, la station de base effectuant une programmation de retransmission sur le terminal dans la première durée.

3. Procédé selon la revendication 1 ou la revendication 2, dans lequel lorsque la station de base nécessite l'envoi d'informations de système dans la première durée, la station de base envoie les informations de système dans la première durée ; et/ou lorsque la station de base nécessite l'envoi d'informations de système dans la seconde durée, la station de base envoie les informations de système dans la seconde durée.

4. Procédé selon l'une quelconque des revendications 1 à 3, dans lequel le fait de déterminer (S310), au moyen d'une station de base, qu'une configuration de sous-trame d'une cellule nécessite un changement d'une première configuration à une seconde configuration consiste à :
déterminer, sur la base d'un état des services de liaison montante et de liaison descendante de la cellule, que la configuration de sous-trame de la cellule nécessite un changement de la première configuration à la seconde configuration.

5. Procédé selon l'une quelconque des revendications 1 à 4, dans lequel une somme de la première durée et de la seconde durée est inférieure à une valeur prédéfinie.

6. Appareil de commutation de configuration de sous-trame (300), situé dans une station de base, et comprenant :
une unité de détermination (301), configurée pour déterminer qu'une configuration de sous-trame d'une cellule de la station de base nécessite un changement d'une première configuration à une seconde configuration ;
une unité de notification (302), configurée pour :
lorsque l'unité de détermination détermine que la configuration de sous-trame de la cellule nécessite un changement de la première configuration à la seconde configuration, notifier un terminal de la cellule du changement de la configuration de sous-trame de la cellule, l'unité de notification (302) étant en outre configurée pour envoyer la seconde configuration au terminal de la cellule lorsqu'une première durée, c'est-à-dire après la notification, expire ; et
une unité de réglage (303), configurée pour rendre la seconde configuration effective lorsqu'une seconde durée, c'est-à-dire après que l'unité de notification a envoyé la seconde configuration, expire, la station de base n'effectuant pas de programmation de transmission initiale sur le terminal de la cellule dans la première durée et la station de base ne planifiant pas le terminal de la cellule dans la seconde durée.

7. Appareil (300) selon la revendication 6, dans lequel lorsque le terminal de la cellule nécessite une retransmission de données dans la première durée, la station de base effectuant une programmation de retransmission sur le terminal dans la première durée.

8. Appareil (300) selon la revendication 6 ou la revendication 7, dans lequel l'unité de notification (302) est en outre configurée pour :
lorsque la station de base nécessite l'envoi d'informations de système dans la première durée, envoyer les informations système dans la première durée ; et/ou lorsque la station de base nécessite l'envoi d'informations de système dans la seconde durée, envoyer les informations système dans la seconde durée.

9. Appareil (300) selon l'une quelconque des revendications 6 à 8, dans lequel l'unité de détermination (301) est spécifiquement configurée pour déterminer, sur la base d'un état des services de liaison montante et de liaison descendante de la cellule, que la configuration de sous-trame de la cellule nécessite un changement de la première configuration à la seconde configuration.

10. Appareil (300) selon l'une quelconque des revendications 6 à 9, dans lequel une somme de la première durée et de la seconde durée est inférieure à une valeur prédéfinie.

11. Programme informatique, comprenant des instructions permettant de mettre en oeuvre le procédé selon l'une quelconque des revendications 1 à 5.

12. Support de stockage lisible par ordinateur, comprenant le programme de la revendication 11.
